# EUROPÄISCHE PATENTANMELDUNG

(11) **EP 0 992 706 A2**
(43) Veröffentlichungstag der Anmeldung: **12.04.2000**
(21) Anmeldenummer: 99116780.0
(22) Anmeldetag: 31.08.1999
(51) Int. Cl.: F16H 3/12, F16H 61/04

(54) **Verfahren zum Schalten eins Zahnräderwechselgetriebes**

(30) Priorität: 30.09.1998 DE 19844783
(71) Anmelder: DaimlerChrysler AG, 70567 Stuttgart (DE)
(72) Erfinder: Eberspächer, Ralph, Dr., 75382 Althengstett (DE); Sperber, Ralf, 73240 Wendlingen (DE); Wörner, Günter, 71394 Kernen (DE)

(57) **Zusammenfassung**

Bei einem Verfahren zum Schalten eines Zahnräderwechselgetriebes sind in die Antriebsverbindung zwischen Ein- (109) und Ausgangswelle (27) jeweils ausschließlich einer Gangübersetzung zugeordnete Zahnradstufen durch Einrücken einer jeweils zugehörigen Zahnradkupplung (24,25) und/oder eine von zwei Zahnradstufen eines Zahnräder-Synchronisiergetriebes (16) durch Einrücken einer Reibschlußverbindung (28,33) für einen Synchronisierzustand "Hochschalten" oder einer Reibschlußverbindung für einen Synchronisierzustand "Rückschalten" einschaltbar. Die Zahnradstufen des Synchronisiergetriebes (47,48,49,50) sind neben ihrer Synchronisierfunktion zusätzlich zur Bildung der Übersetzungen des höchsten und des niedrigsten Vorwärtsganges verwendet. Bei allen Gangschaltungen erfolgt je nach vorliegendem Zug- oder Schubbetrieb in den Synchronisierzuständen eine Abstimmung bezüglich der Übertragungsfähigkeit der jeweils beteiligten Reibschlußverbindungen und bezüglich der momentanen Drehzahl- oder Drehmomentverhältnisse an den zu betätigenden Zahnradkupplungen und gegebenenfalls bezüglich einer Regelung des Antriebsmotores hinsichtlich Drehmoment oder Synchrondrehzahl der Eingangswelle derart, daß ein Drehmomentabfall an der Ausgangswelle so gering wie möglich gehalten und dadurch die Charakteristik einer Lastschaltung wenigstens annähernd erreicht wird.

## Beschreibung

Die Erfindung bezieht sich auf ein Verfahren zum Schalten eines Zahnräderwechselgetriebes nach dem Oberbegriff von Patentanspruch 1.
Gegenstand der nicht vorveröffentlichten deutschen Patentanmeldung 198 14 559.1-12 ist ein Zahnräderwechselgetriebe, welches nach dem Oberbegriff von Patentanspruch 1 der vorliegenden Patentanmeldung ausgestaltet und schaltbar ist.
Die der vorliegenden Erfindung zugrunde liegende Aufgabe ist im wesentlichen darin zu sehen, ein Verfahren zum Schalten eines solchen Zahnräderwechselgetriebes zu schaffen derart, daß für die Hoch- und Rückschaltungen sowohl im Zug- als auch im Schubbetrieb eine Lastschaltcharakteristik wenigstens annähernd erreicht ist.
Die erläuterte Aufgabe ist gemäß der Erfindung mit den Merkmalen jeweils eines der Patentansprüche 1 bis 14 für die im Anspruch gekennzeichnete Schaltungsart in vorteilhafter Weise gelöst.
Im einzelnen gilt dies bei dem Verfahren nach der Erfindung gemäß Patentanspruch 1 für die Hochschaltungen im Zug- oder Schubbetrieb aus dem niedrigsten Vorwärtsgang, in welchem die die Übersetzung größer als 1 aufweisende Zahnradstufe des Synchronisiergetriebes allein die Gangübersetzung bildet, so daß beim Schalten neben dem Synchronisiervorgang auch der Wechsel der Schaltmittel von der Reibschlußverbindung des Synchronisiergetriebes auf die Formschlußkupplung der Zahnradstufe des höheren Vorwärtsganges in bezug auf den Drehmomentverlauf einer Lastschaltung in vorteilhafter Weise berücksichtigt ist.

In den Patentansprüchen 2 und 3 sind zwei alternative Verfahren nach der Erfindung für die Rückschaltungen im Zugbetrieb in den niedrigsten Vorwärtsgang, in welchem - wie erwähnt - die die Übersetzung größer als 1 aufweisende Zahnradstufe des Synchronisiergetriebes allein die Gangübersetzung bildet - enthalten, bei denen neben dem Synchronisiervorgang in diesem Falle auch der umgekehrte Wechsel der Schaltmittel von der Formschlußkupplung der Zahnradstufe des höheren Ganges auf die Reibschlußverbindung des Synchronisiergetriebes in vorteilhafter Weise berücksichtigt ist.

Das Verfahren nach der Erfindung gemäß Patentanspruch 4 löst die Aufgabe für die Schub-Rückschaltungen in den niedrigsten Vorwärtsgang, bei denen wiederum Synchronisiervorgang und Wechsel der Schaltmittel in vorteilhafter Weise berücksichtigt sind.

Die Verfahren nach der Erfindung gemäß den Patentansprüchen 5 bis 9 sind auf diejenigen Gangwechsel in bezug auf die Lösung der Aufgabe abgestellt, bei denen die Zahnradstufen des Synchronisiergetriebes nicht beteiligt sind. Im einzelnen sind diesbezügliche Zug-Hochschaltungen Gegenstand von Patentanspruch 5, diesbezügliche Schub-Hochschaltungen Gegenstand von Patentanspruch 6, diesbezügliche Zug-Rückschaltungen in zwei Alternativen Gegenstand der Patentansprüche 7 und 8, und schließlich diesbezügliche Schub-Rückschaltungen Gegenstand von Patentanspruch 9.

Die Verfahren nach der Erfindung gemäß den Patentansprüchen 10 und 11 sind auf die Zug(Patentanspruch 10)- und Schub(Patentanspruch 11)-Hochschaltungen in den höchsten Vorwärtsgang, in welchem die die Übersetzung kleiner als 1 aufweisende Zahnradstufe des Synchronisiergetriebes allein die Gangübersetzung bildet, in bezug auf die Lösung der Aufgabe abgestellt, wobei neben dem Synchronisiervorgang auch der Wechsel der Schaltmittel beim Schalten in vorteilhafter Weise berücksichtigt ist.

Zwei alternative Verfahren nach der Erfindung gemäß den Patentansprüchen 12 und 13 lösen jeweils die Aufgabe für die Zug-Rückschaltungen aus dem höchsten Vorwärtsgang, in welchem wiederum die die Übersetzung kleiner als 1 aufweisende Zahnradstufe des Synchronisiergetriebes allein die Gangübersetzung bildet, wobei auch in diesem Falle neben dem Synchronisiervorgang der Wechsel der Schaltmittel von der Reibschlußverbindung des Synchronisiergetriebes auf die Formschlußkupplung der Zahnradstufe des höheren Ganges jeweils in vorteilhafer Weise berücksichtigt ist.

Letztendlich wird durch das Verfahren nach der Erfindung gemäß Patentanspruch 14 die gestellt Aufgabe für Schub-Rückschaltungen aus dem höchsten Vorwärtsgang gelöst, bei welchem wiederum die die Übersetzung kleiner als 1 aufweisende Zahnradstufe des Synchronisiergetriebes allein die Gangübersetzung bildet, wobei auch in diesem Falle neben dem Synchronisiervorgang zusätzlich der Schaltmittel-Wechsel von der Reibschlußverbindung des Synchronisiergetriebes auf die Formschlußkupplung des niedrigeren Ganges in vorteillhafter Weise berücksichtigt ist.

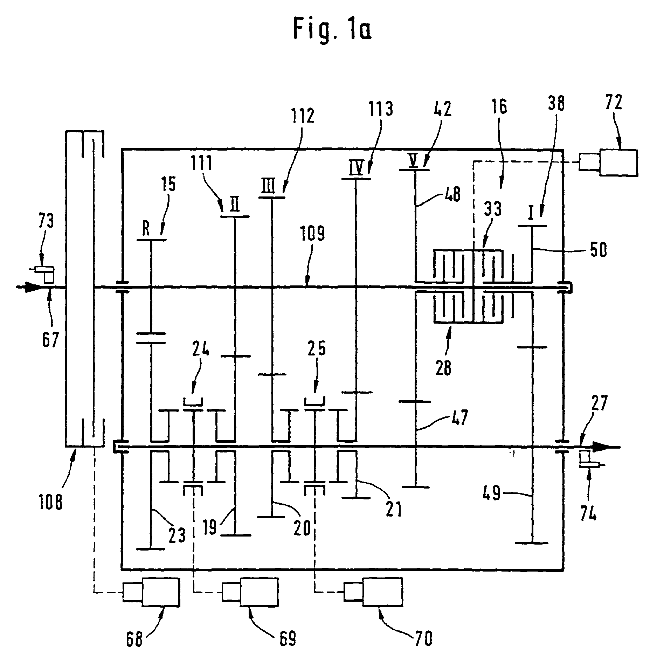

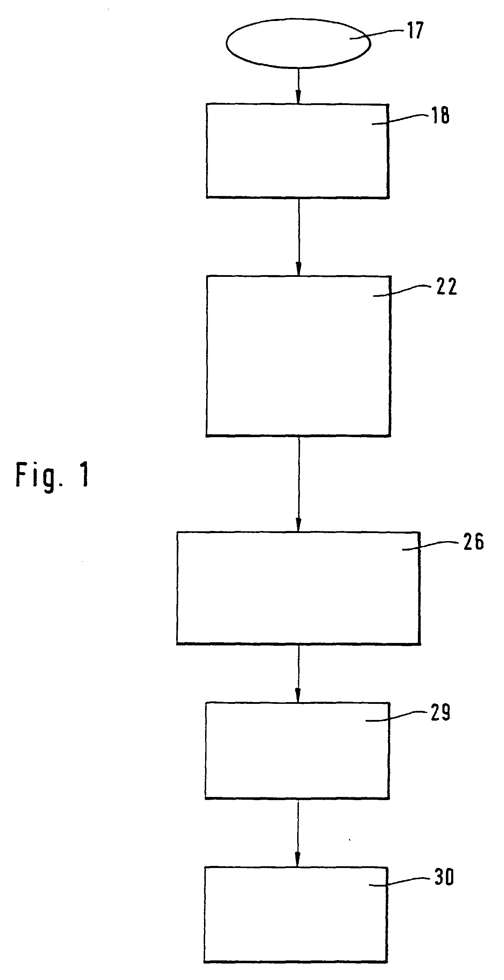

Das Verfahren nach der Erfindung ist nachstehend anhand von in der Zeichnung schematisch in Form von Flußdiagrammen dargestellten Ausführungsformen für fünfzehn Schaltungsarten beim Gangwechsel eines Zahnräderwechselgetriebes mit formschlüssigen Zahnradkupplungen und einem Zahnräder-Synchronisiergetriebe näher beschrieben. In der Zeichnung bedeuten
- Fig.1a: ein Getriebeschema eines Zahnräderwechselgetriebes, welches nach dem Verfahren gemäß der Erfindung schaltbar ist, und die
- Fign.1-14: je ein Flußdiagramm für insgesamt fünfzehn Schaltungsarten bei dem Zahnräderwechselgetriebe von Fig.1a.

Bei dem Zahnräderwechselgetriebe der Fig.1a ist eine Eingangswelle 109 wahlweise durch jeweils eine von vier Zahnradstufen 15 und 111 bis 113 für einen Rückwärtsgang R und drei Vorwärtsgänge II bis IV mit einer parallelen Ausgangswelle 27 unter Vermittlung von zwei formschlüssigen Wechsel-Zahnradkupplungen 24 und 25 in Antriebsverbindung bringbar. Die Eingangswelle 109 ist durch eine reibschlüssige Hauptkupplung 108 mit der Kurbelwelle 57 eines Antriebsmotores verbunden, dessen Drehzahl durch einen Drehzahlsensor 73 erfaßbar ist, während die Drehzahl der Ausgangswelle 27 durch einen Drehzahlsensor 74 ermittelt wird. Die Kuppplungen 108,24 und 25 werden durch zugehörige mit Hilfskraft betriebene Kupplungsstellglieder 68 bis 70 betätigt. Durch die Wechsel-Zahnradkupplung 24 sind die Losräder 23 und 19 der Zahnradstufen 15 und 111 wahlweise mit der Augangswelle 27 kuppelbar, während die Losräder 20 und 21 der Zahnradstufen 112 und 113 durch die Wechsel-Zahnradkupplung 25 mit der Ausgangswelle 27 wahlweise kuppelbar sind.
Das über ein nicht mehr dargestelltes, die Drehrichtungsumkehr bewirkendes Zwischenzahnrad mittelbar mit dem Losrad 23 der Zahnradstufe 15 für den Rückwärtsgang im Kämmeingriff stehende Festrad dieser Zahnradstufe 15 ist ebenso wie die mit ihrem jeweiligen Losrad 19 bis 21 unmittelbar kämmenden Festräder der Zahnradstufen 111 bis 113 drehfest auf der Eingangswelle 109 angeordnet.
Die Eingangswelle 109 ist mit der Ausgangswelle 27 weiterhin über ein Zahnräder-Synchronisiergetriebe 16 in Antriebsverbindung bringbar, welches eine Zahnradstufe 38 mit einer Übersetzung größer als 1 und eine Zahnradstufe 42 mit einer Übersetzung kleiner als 1 aufweist.
Das mit dem drehtest auf der Ausgangswelle 27 sitzenden Festrad 49 kämmende Losrad 50 der Zahnradstufe 38 ist koaxial zur Eingangswelle 109 angeordnet und mit letzterer durch eine Reibschlußverbindung 33 kuppelbar, um einerseits eine Anpassung der Drehzahl der Eingangswelle 109 an die jeweilige Synchrondrehzahl bei einem Schaltvorgang zu erreichen - und andererseits den niedrigsten Vorwärtsgang I zu schalten, dessen Gangübersetzung allein durch die Übersetzung der Zahnradstufe 38 gebildet wird.
Das mit dem drehfest auf der Ausgangswelle 27 sitzenden Festrad 47 kämmende Losrad 48 der Zahnradstufe 42 ist koaxial zur Eingangswelle 109 angeordnet sowie mit letzterer durch eine Reibschlußverbindung 28 kuppelbar, um einerseits eine Anpassung der Drehzahl der Eingangswelle 109 an die jeweilige Synchrondrehzahl bei einem Schaltvorgang zu erreichen - und andererseits den höchsten Vorwärtsgang zu schalten, dessen Gangübersetzung allein durch die Übersezung der Zahnradstufe 42 gebildet wird.

Die Hauptkupplung 108 wird lediglich als Anfahrelement verwendet - bleibt also beim Gangwechsel eingerückt.

Das Zahnräder-Synchronisiergetriebe 16 kann durch eine nicht mehr dargestellte elektronische Steuereinheit unter Verarbeitung von Ausgangssignalen der Sensoren 73,74 über Drehzahlen und Drehmomente des Antriebsstranges zwischen Kurbelwelle 67 und Ausgangswelle 27 in einen Sychronisierzustand "Hochschalten" mit konstanter oder mit sich ändernder Übertragungsfähigkeit der Reibschlußverbindung 28 gesteuert werden, in welchem somit die Zahnradstufe 42 in die Antriebsverbindung zwischen Ein- und Ausgangswelle 109 und 27 eingeschaltet ist.

Das Zahnräder-Synchronisiergetriebe 16 kann durch die Steuereinheit in einen Synchronisierzustand "Rückschalten" mit konstanter oder mit sich ändernder Übertragungsfähigkeit der Reibschlußverbindung 33 gesteuert werden, in welchem dann die Zahnradstufe 38 in die Antriebsverbindung zwischen Ein- und Ausgangswelle 109 und 27 eingeschaltet ist.

Das Wesentliche bei dem Verfahren nach der Erfindung ist darin zu sehen, daß in den Synchronisierzuständen des Synchronisiergetriebes 16 sowohl eine Steuerung der Drehzahl der Eingangswelle 109 in Richtung der dem neuen Gang entsprechenden Synchrondrehzahl als auch eine Beeinflussung des Drehmomentverlaufes an der Ausgangswelle 27 im Sinne einer Lastschaltung allein durch Regelung der Übertragungsfähigkeit der Reibschlußverbindungen 28,33 und/oder durch Regelung des Antriebsmotores erreicht ist.

Bei dem der Lehre von Patentanspruch 1 entsprechenden Verfahren nach dem Flußdiagramm der Fi.1 für Zug- oder Schub-Hochschaltungen aus dem niedrigsten Vorwärtsgang I, in welchem die Zahnradstufe 38 des Synchronisiergetriebes 16 durch vollständiges Einrücken der Reibschlußverbindung 33 die Antriebsverbindung zwischen Ein- und Ausgangswelle 109 und 27 herstellt und dadurch die Gangübersetzung allein bildet, wird bei Auftreten eines Schaltbefehles 17 für eine Hochschaltung vom I.Gang in den II.Gang zunächst ein Verfahrensschritt 18 ausgelöst, in welchem ermittelt wird, ob sich der Antriebsmotor im Zug- oder im Schub-Betrieb befindet. Sodann oder gleichzeitig wird in einem weiteren Verfahrensschritt 22 eine Überschneidungssteuerung der Übertragungsfähigkeiten der Reibschlußverbindungen 28 und 33 ausgelöst dahingehend, daß die Übertragungsfähigkeit der Reibschlußverbindung 33 mit steigender Übertragungsfähigkeit der Reibschlußverbindung 28 abnimmt. Wenn die Reibschlußverbindung 33 nicht mehr oder nur noch unwesentlich an der Drehmomentübertragung beteiligt ist, wird in einem weiteren Verfahrensschritt 26 die Drehzahl der Bingangswelle 109 in Richtung der dem II.Gang zugehörigen Synchrondrehzahl geregelt, und zwar durch Beeinflussung der Übertragungsfähigkeit der Reibschlußverbindung 28 allein oder wahlweise unter zusätzlicher Regelung des Antriebsmotores. Wenn die Synchrondrehzahl erreicht und somit die Differenzdrehzahl an der Zahnradkupplung 24-19 des II.Ganges gegen Null gegangen ist, wird in einem weiteren Verfahrensschritt 29 bestimmt, daß die Zahnradkupplung 24-19 des II.Ganges eingerückt wird. Nach erfolgter Einschaltung der Zahnradstufe 111 des II.Ganges in die Antriebsverbindung zwischen Ein- und Ausgangswelle 109 und 27 wird in einem weiteren Verfahrensschritt 30 die Reibschlußverbindung 28 ausgerückt und dadurch der Schaltvorgang beendet.

Zug- und Schubhochschaltungen aus dem niedrigsten Vorwärtsgang I in einen der beiden anderen Vorwärtsgänge III oder IV, deren Zahnradstufen 112 und 113 nicht dem Synchronisiergetriebe 16 angehören, verlaufen analog zu dem vorstehend beschriebenen Verfahren der Fig.1.

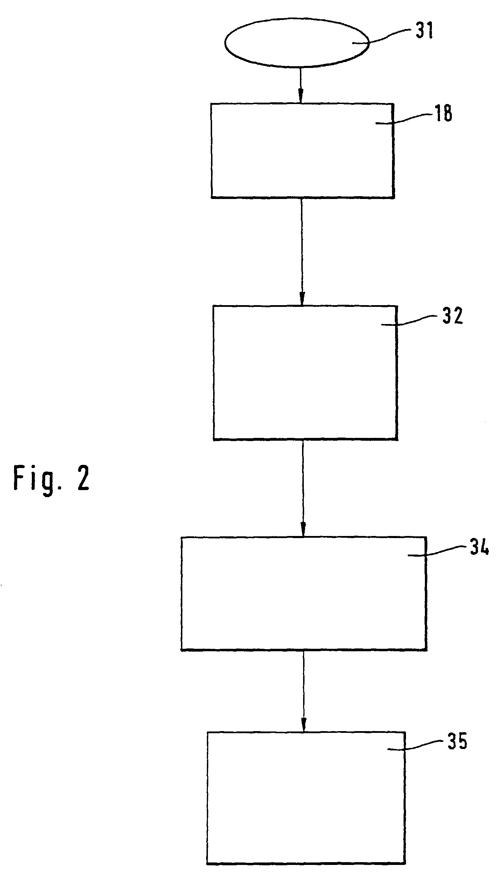

Bei dem der Lehre von Patentanspruch 2 entsprechenden Verfahren nach dem Flußdiagramm der Fig.2 als eine erste Variante für Zug-Rückschaltungen in den niedrigsten Vorwärtsgang I, in welchem die Zahnradstufe 38 des Synchronisiergetriebes 16 die Antriebsverbindung zwischen Ein- und Ausgangswelle 109 und 27 herstellt und dadurch die Gangübersetzung allein bildet, wird bei Auftreten eines Schaltbefehles 31 für eine Rückschaltung aus dem II.Gang in den I.Gang wiederum ein Verfahrensschritt 18 ausgelöst, in welchem ermittelt wird, ob sich der Antriebsmotor im Zug- oder im Schubbetrieb befindet. Dabei oder anschließend wird in einem weiteren Verfahrensschritt 32 bestimmt, daß das Motormoment des Antriebsmotores kurzzeitig nach Null zurückgenommen und dann die Zahnradkupplung 24-19 des II.Ganges ausgerückt wird. In einem weiteren Verfahrensschritt 34 wird die Reibschlußverbindung 33 unter steigender Übertragungsfähigkeit eingerückt und die Drehzahl der Eingangswelle 109 auf die dem I.Gang entsprechende Synchrondrehzahl eingeregelt - und zwar vorzugsweise durch Regelung des Antriebsmotores allein bzw. und/oder durch Beeinflussung der Übertragungsfähigkeit der Reibschlußverbindung 33. Bei oder nach Erreichen der Synchrondrehzahl wird in einem weiteren Verfahrensschritt 35 bestimmt, daß die Übertragungsfähigkeit der Reibschlußverbindung 33 entsprechend dem momentanen Betriebspunkt des Antriebmotores eingestellt und damit der Schaltvorgang beendet wird.

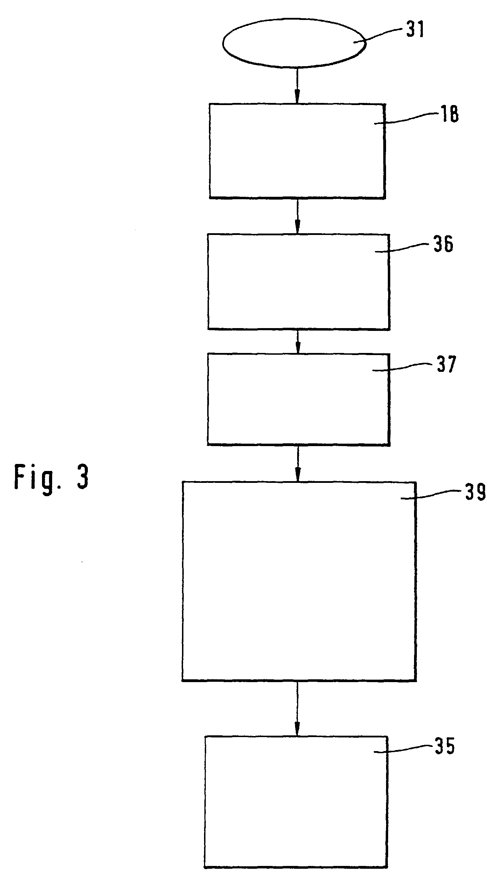

Bei dem der Lehre von Patentanspruch 3 entsprechenden Verfahren nach dem Flußdiagramm der Fig.3 als eine zweite Alternative für Zug-Rückschaltungen in den niedrigsten Vorwärtsgang I, in welchem die Zahnradstufe 38 die Antriebsverbindung zwischen Ein- und Ausgangswelle 109 und 27 herstellt und dadurch die Gangübersetzung allein bildet, wird bei Auftreten eines Schaltbefehles 31 für eine Rückschaltung aus dem II.Gang in den I.Gang ein Verfahrensschritt 18 ausgelöst, in welchem ermittelt wird, ob sich der Antriebsmotor im Zug- oder im Schubbetrieb befindet. In einem weiteren Verfahrensschritt 36 wird die Reibschlußverbindung 28 unter steigender Übertragungsfähigkeit eingerückt, bis das Kupplungsmoment an der Zahnradkupplung 24-19 gegen Null geht. In diesem Fall wird ein weiterer Verfahrensschritt 37 ausgelöst, in welchem die Zahnradkupplung 24-19 der Zahnradstufe 111 des II.Ganges ausgerückt wird.
Hierauf schließt sich ein weiterer Verfahrensschritt 39 an, in welchem eine Überschneidungssteuerung der Übertragungsfähigkeiten der Reibschlußverbindungen 28 und 33 dahingehend erfolgt, daß die Übertragungsfähigkeit der Reibschlußverbindung 28 mit steigender Übertragungsfähigkeit der anderen Reibschlußverbindung 33 abnimmt. Hierbei wird eine Anhebung der Drehzahl der Eingangswelle 109 auf die dem I.Gang entsprechende Synchrondrehzahl durch die steigende Übertragungsfähigkeit der Reibschlußverbindung 33 und/oder durch eine diesbezügliche Regelung des Antriebsmotores erreicht. Wenn die Differenzdrehzahl der Reibschlußverbindung 33 gegen Null geht, schließt sich ein weiterer Verfahrensschritt 35 an, in welchem die Übertragungsfähigkeit der Reibschlußverbindung 33 entsprechend dem momentanen Betriebspunkt des Antriebsmotores eingestellt und somit der Schaltvorgang beendet wird.

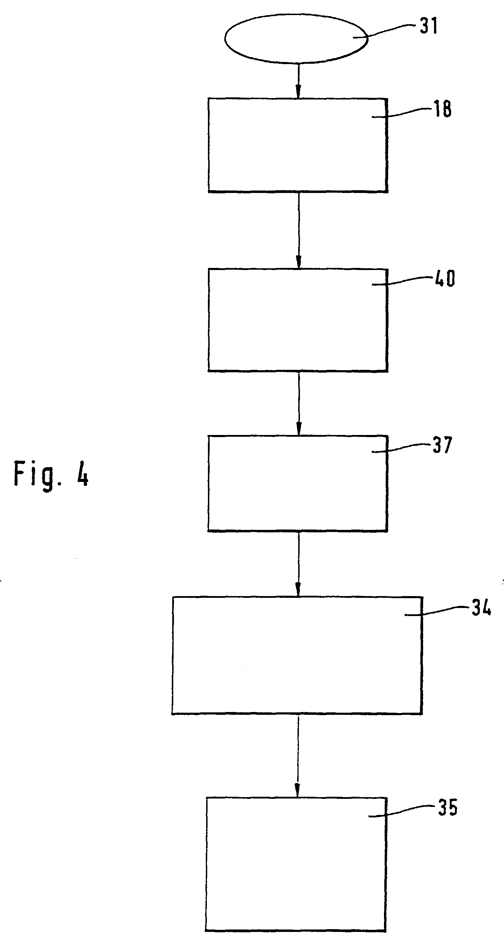

Bei dem der Lehre von Patentanspruch 4 entsprechenden Verfahren nach dem Flußdiagramm der Fig.4 für Schub-Rückschaltungen in den niedrigsten Vorwärtsgang I, in welchem die Zahnradstufe 38 des Synchronisiergetriebes 16 die Antriebsverbindung zwischen Ein- und Ausgangswelle 109 und 27 herstellt und somit die Gangübersetzung allein bildet, wird bei Auftreten eines Schaltbefehles 31 für eine Rückschaltung vom II.Gang in den I.Gang ein Verfahrensschritt 18 ausgelöst, in welchem überprüft wird, ob sich der Antriebsmotor im Zug- oder im Schubbetrieb befindet. In einem weiteren Verfahrensschritt 40 wird bestimmt, daß die Reibschlußverbindung 33 unter steigender Übertragungsfähigkeit eingerückt wird. Wenn hierbei das Kupplungsmoment an der Zahnradkupplung 24-19 der Zahnradstufe 111 des II.Ganges gegen Null geht, schließt sich ein weiterer Verfahrensschritt 37 an, in welchem die Zahnradkupplung 24-19 ausgerückt wird. In einem weiteren Verfahrensschritt 34 wird die Reibschlußverbindung 33 unter steigender Übertragungsfähigkeit eingerückt, wobei die Drehzahl der Eingangswelle 109 auf die dem I.Gang entsprechende Synchrondrehzahl eingestellt wird - vorzugsweise durch Regelung des Antriebsmotores und/oder durch Regelung der Übertragungsfähigkeit der Reibschlußverbindung 33. Wenn die Differenzdrehzahl der Reibschlußverbindung 33 gegen Null geht, wird durch einen weiteren Verfahrensschritt 35 die Übertragungsfähigkeit der Reibschlußverbindung 33 entsprechend dem momentanen Betriebspunkt des Antriebsmotores eingestellt und der Schaltvorgang beendet.

Zug- und Schubrückschaltungen in den niedrigsten Vorwärtsgang I aus einem der beiden anderen Vorwärtsgänge III und IV, deren Zahnradstufen 112 und 113 nicht dem Synchronisiergetriebe 16 angehören, verlaufen analog zu einem der Verfahren der Fign. 2 bis 4.

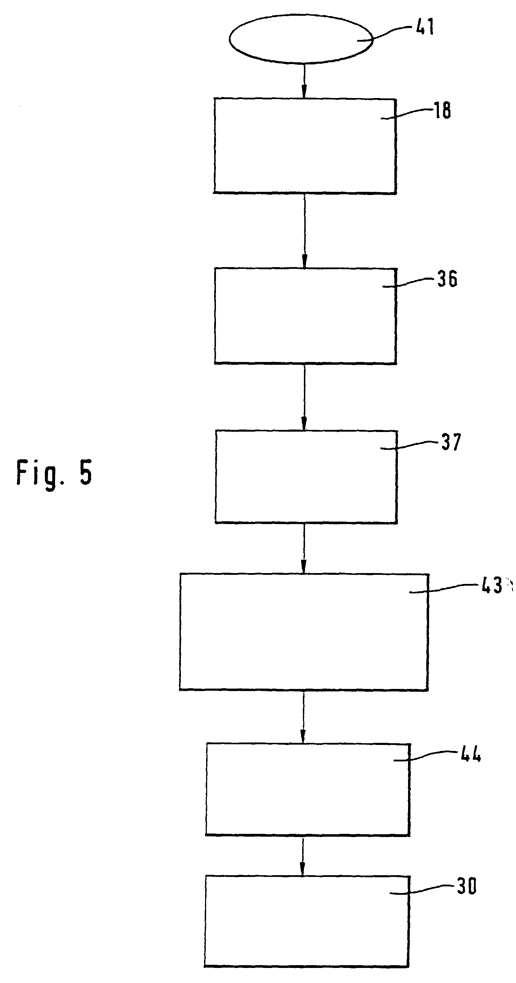

Bei dem der Lehre von Patentanspruch 5 entsprechenden Verfahren nach dem Flußdiagramm der Fig.5 für Zug-Hochschaltungen zwischen zwei Vorwärtsgängen, deren Zahnradstufen nicht dem Synchronisiergetriebe 16 angehören, wird bei Auftreten eines Schaltbefehles 41 für eine Hochschaltung vom II.Gang in den III.Gang ein Verfahrensschritt 18 ausgelöst, in welchem festgestellt wird, ob sich der Antriebsmotor im Zug- oder im Schubbetrieb befindet. In einem weiteren Verfahrensschritt 36 wird bestimmt, daß die Reibschlußverbindung 28 unter steigender Übertragungsfähigkeit eingerückt wird. Wenn hierbei das Kupplungsmoment an der Zahnradkupplung 24-19 der Zahnradstufe 111 des II.Ganges gegen Null geht, wird ein weiterer Verfahrensschritt 37 ausgelöst, in welchem die Zahnradkupplung 24-19 ausgerückt wird. In einem weiteren Verfahrensschritt 43 wird die Reibschlußverbindung 28 unter steigender Übertragungsfähigkeit eingerückt und die Drehzahl der Eingangswelle 109 auf die dem III.Gang entsprechende Synchrondrehzahl eingeregelt - durch Regelung der Übertragungsfähigkeit der Reibschlußverbindung 28 und/oder durch Regelung des Antriebsmotores. Wenn hierbei die Differenzdrehzahl der Zahnradkupplung 25-20 der Zahnradstufe 112 des III.Ganges gegen Null geht, wird in einem weiteren Verfahrensschritt 44 festgelegt, daß die Zahnradkupplung 25-20 eingerückt wird. Letztlich wird in einem weiteren Verfahrensschritt 30 die Reibschlußverbindung 28 ausgerückt und die Schaltung beendet.

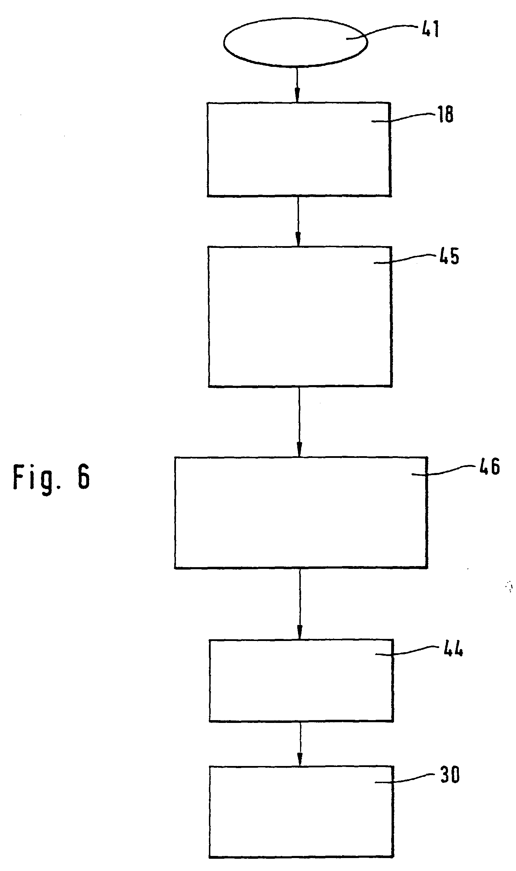

Bei dem der Lehre von Patentanspruch 6 entsprechenden Verfahren nach dem Flußdiagramm der Fig.6 für Schub-Hochschaltungen zwischen zwei Vorwärtsgängen, deren Zahnradstufen nicht dem Synchronisiergetriebe 16 angehören, wird bei Auftreten eines Schaltbefehles 41 für eine Hochschaltung vom II.Gang in den III.Gang ein Verfahrensschritt 18 ausgelöst, in welchem festgestellt wird, ob sich der Antriebsmotor im Zug- oder im Schubbetrieb befindet. In einem weiteren Verfahrensschritt 45 wird das Motormoment des Antriebsmotores kurzzeitig erhöht und die Zahnradkupplung 24-19 der Zahnradstufe 111 des II.Ganges ausgerückt. In einem weiteren Verfahrensschritt 46 wird die Reibschlußverbindung 28 unter steigender Übertragungsfähigkeit eingerückt und die Drehzahl der Eingangswelle 109 auf die dem III.Gang entsprechende Synchrondrehzahl geregelt - durch Regelung der Übertragungsfähigkeit der Reibschlußverbindung 28 und/oder durch Regelung des Antriebsmotores. Wenn hierbei die Differenzdrehzahl der Zahnradkupplung 25-20 der Zahnradstufe 112 des III.Ganges gegen Null geht, wird in einem weiteren Verfahrensschritt 44 die Zahnradkupplung 25-20 eingerückt sowie in einem letzten Vefahrensschritt 30 die Reibschlußverbindung 28 ausgerückt und der Schaltvorgang dadurch beendet.

Zug- und Schubhochschaltungen, an denen der IV.Gang bzw. dessen zugehörige Zahnradstufe 113 sowie einer der beiden anderen Vorwärtsgänge II und III, deren Zahnradstufen ebenfalls nicht dem Synchronisiergetriebe 16 angehören,beteiligt sind, verlaufen jeweils analog zu einem der beiden Verfahren der Fign.5 und 6.

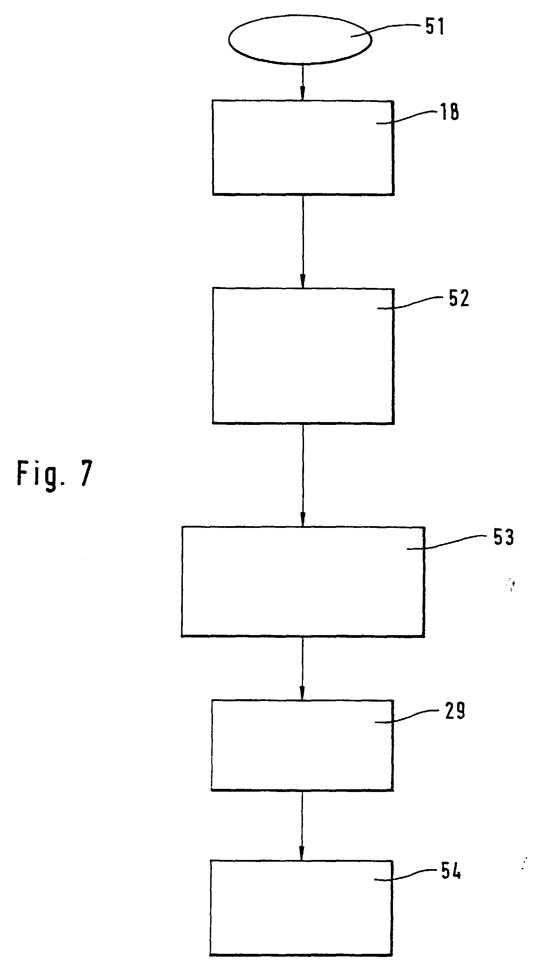

Bei dem der Lehre von Patentanspruch 7 entsprechenden Verfahren nach dem Flußdiagramm der Fig.7 als eine von zwei Varianten für Zug-Rückschaltungen zwischen zwei Vorwärtsgängen, deren Zahnradstufen nicht dem Synchronisiergetriebe 16 angehören, wird bei Auftreten eines Schaltbefehles 51 für eine Rückschaltung vom III.Gang in den II.Gang ein Verfahrensschritt 18 ausgelöst, in welchem festgestellt wird, ob sich der Antriebsmotor im Zug- oder im Schubbetrieb befindet. In einem weiteren Verfahrensschritt 52 wird das Motormoment des Antriebsmotores kurzzeitig nach Null reduziert und die Zahnradkupplung 25-20 der Zahnradstufe 112 des III.Ganges ausgerückt. In einem weiteren Verfahrensschritt 53 wird die Reibschlußverbindung 33 unter Aufrechterhaltung eines Schlupfzustandes eingerückt und die Drehzahl der Eingangswelle 109 durch Regelung des Antriebsmotores auf die dem II.Gang entsprechende Synchrondrehzahl geregelt. Wenn hierbei die Differenzdrehzahl der Zahnradkupplung 24-19 der Zahnradstufe 111 des II.Ganges gegen Null geht, wird in einem weiteren Verfahrensschritt 29 die Zahnradkupplung 24-19 eingerückt sowie in einem letzten Verfahrensschritt 54 die Reibschlußverbindung 33 ausgerückt und damit der Schaltvorgang beendet.

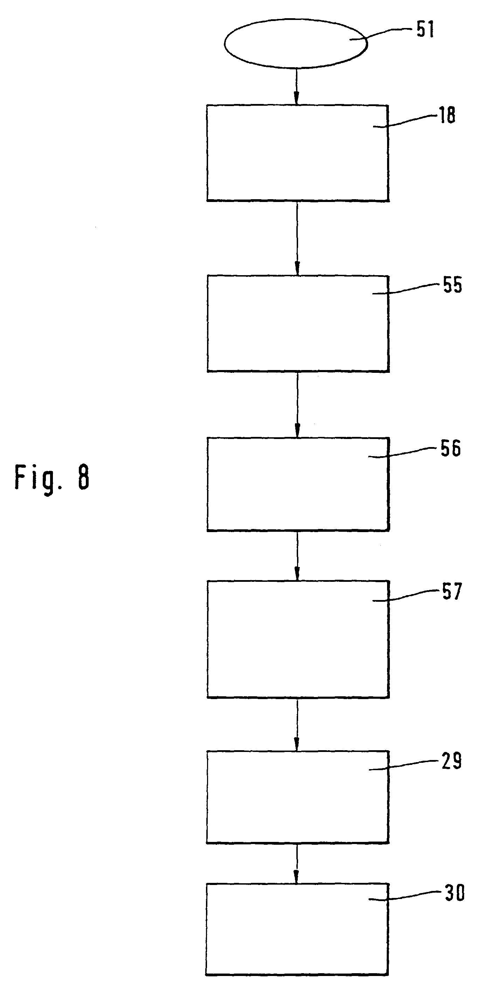

Bei dem der Lehre von Patentanspruch 8 entsprechenden Verfahren nach dem Flußdiagramm der Fig.8 als die andere der beiden Varianten für Zug-Rückschaltungen zwischen zwei Vorwärtsgängen, deren Zahnradstufen nicht dem Synchronisiergetriebe 16 angehören, wird bei Auftreten eines Schaltbefehles 51 für eine Rückschaltung vom III.Gang in den II.Gang ein Verfahrensschritt 18 ausgelöst, in welchem festgestellt wird, ob sich der Antriebsmotor im Zug- oder im Schubbetrieb befindet. In einem weiteren Verfahrensschritt 55 wird die Reibschlußverbindung 28 unter steigender Übertragungsfähigkeit eingerückt. Wenn hierbei das Kupplungsmoment an der Zahnradkupplung 25-20 der Zahnradstufe 112 des III.Ganges gegen Null geht, wird die Zahnradkupplung 25-20 in einem weiteren Verfahrensscchritt 56 ausgerückt. Nach dem Ausrücken der Zahnradkupplung 25-20 schließt sich ein weiterer Verfahrensschritt 57 an, in welchem unter Aufrechterhaltung der Übertragungsfähigkeit der Reibschlußverbindung 28 im Schlupfbetrieb die Drehzahl der Eingangswelle 109 durch Auftouren des Antriebsmotores auf die dem II.Gang entsprechende Synchrondrehzahl geregelt wird. Wenn die Differenzdrehzahl an der Zahnradkupplung 24-19 der Zahnradstufe 111 des II.Ganges gegen Null geht, wird in einem weiteren Verfahrensschritt 29 die Zahnradkupplung 24-19 eingerückt und schließlich mit einem letzten Verfahrensschritt 30 die Reibschlußverbindung 28 ausgerückt und damit der Schaltvorgang beendet.

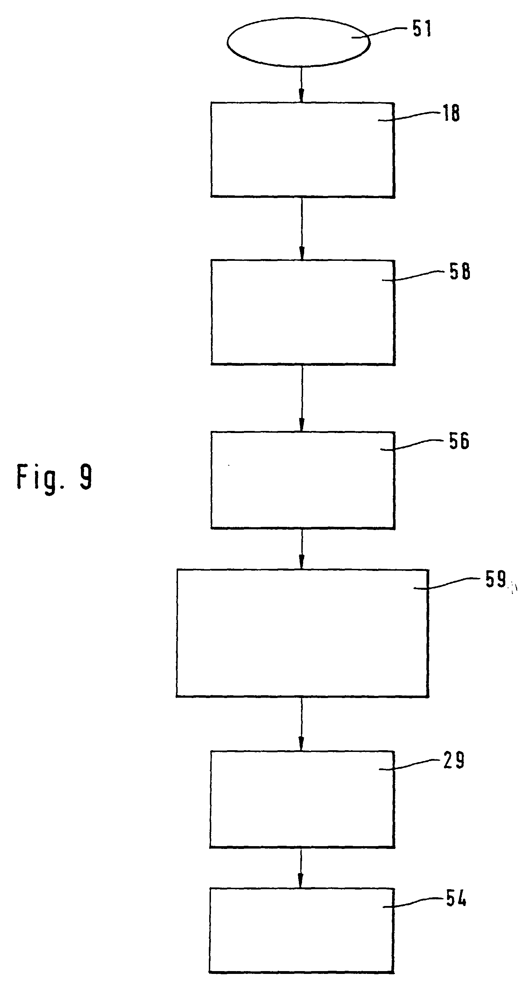

Bei dem der Lehre von Patentanspruch 9 entsprechenden Verfahren nach dem Flußdiagramm der Fig.9 für Schub-Rückschaltungen zwischen zwei Vorwärtsgängen, deren Zahnradstufen nicht dem Synchronisiergetriebe 16 angehören, wird bei Auftreten eines Schaltbefehles 51 für eine Rückschaltung vom III.Gang in den II.Gang in einem ersten Verfahrensschritt 18 überprüft, ob sich der Antriebsmotor im Zug- oder im Schubbetrieb befindet. In einem weiteren Verfahrensschritt 58 wird die Reibschlußverbindung 33 unter steigender Übertragungsfähigkeit eingerückt. Wenn das Kupplungsmoment an der Zahnradkupplung 25-20 des III.Ganges gegen Null geht, wird die Zahnradkupplung 25-20 in einem weiteren Verfahrensschritt 56 ausgerückt. In einem weiteren Verfahrensschritt 59 wird unter Aufrechterhaltung der Übertragungsfähigkeit der Reibschlußverbindung 33 im Schlupfbetrieb die Drehzahl der Eingangswelle 109 auf die dem II.Gang entsprechende Synchrondrehzahl wahlweise unter zusätzlicher Regelung des Antriebsmotores eingestellt. Wenn die Differenzdrehzahl an der Zahnradkupplung 24-19 der Zahnradstufe 111 des II.Ganges gegen Null geht, wird die Zahnradkupplung 24-19 in einem weiteren Verfahrensschritt 29 eingerückt, so daß schließlich mit einem letzten Verfahrensschritt 54 die Reibschlußverbindung 33 ausgerückt und der Schaltvorgang damit beendet werden kann.

Hoch- oder Rückschaltungen im Zug- oder im Schubbetrieb, an denen die Zahnradstufe 113 des IV.Ganges sowie eine der beiden anderen, nicht dem Synchronisiergetriebe 16 angehörenden Zahnradstufen 111 und 112 des II. und III.Ganges beteiligt sind, verlaufen analog zu einem der Verfahren der Fign.5 bis 9.

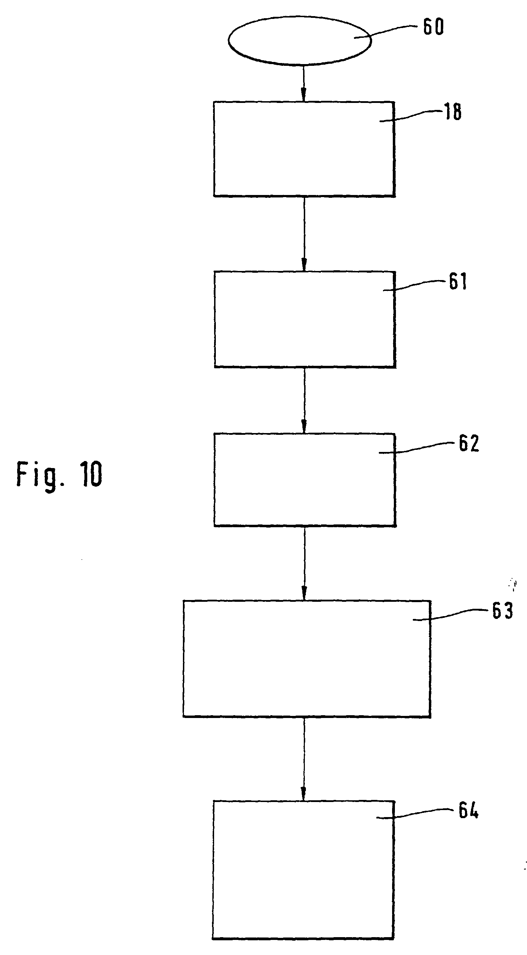

Bei dem der Lehre von Patentanspruch 10 entsprechenden Verfahren nach dem Flußdiagramm der Fig.10 für Zug-Hochschaltungen in den V.Gang, in welchem die Zahnradstufe 42 des Synchronisiergetriebes 16 in die Antriebsverbindung zwischen Ein- und Ausgangswelle 109 und 27 allein eingeschaltet ist und dadurch die Gangübersetzung bildet, wird bei Auftreten eines Schaltbefehles 60 für die Hochschaltung vom IV.Gang in den V.Gang zunächst wieder in einem Verfahrensschritt 18 überprüft, ob sich der Antriebsmotor im Zug- oder im Schubbetrieb befindet. In einem weiteren Verfahrensschritt 61 wird die Reibschlußverbindung 28 unter steigender Übertragungsfähigkeit eingerückt. Wenn das Kupplungsmoment an der Zahnradkupplung 25-21 des IV.Ganges gegen Null geht, wird die Zahnradkupplung 25-21 in einem weiteren Verfahrensschritt 62 ausgerückt. Nach dem Ausrücken der Zahnradkupplung 25-21 wird in einem weiteren Verfahrensschritt 63 unter Aufrechterhaltung der Übertragungsfähigkeit der Reibschlußverbindung 28 im Schlupfbetrieb wahlweise unter zusätzlicher Regelung des Antriebsmotores die Drehzahl der Eingangswelle 109 auf die dem V.Gang entsprechende Synchrondrehzahl geregelt. Wenn die Differenzdrehzahl der Reibschlußverbindung 28 gegen Null geht, wird diese in einem letzten Verfahrensschritt 54 vollständig eingerückt und dabei in ihrer Übertragungsfähigkeit entsprechend dem momentanen Betriebspunkt des Antriebsmotores eingestellt, wodurch der Schaltvorgang beendet ist.

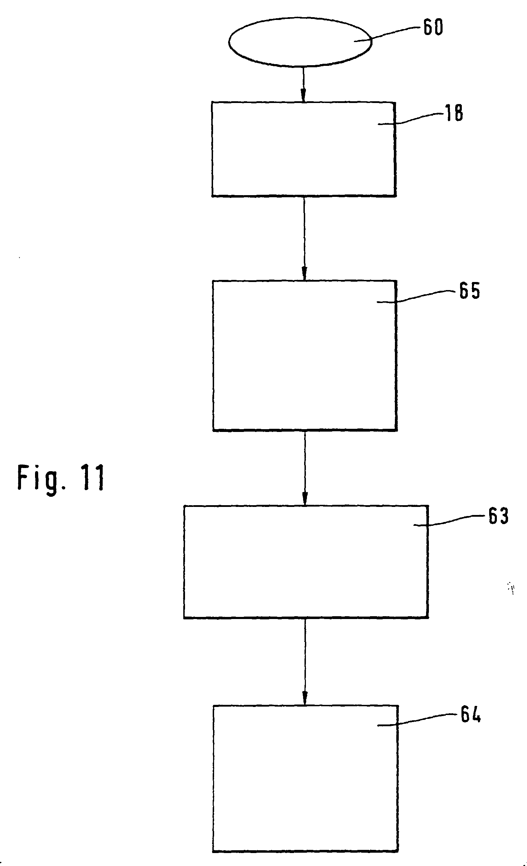

Bei dem der Lehre von Patentanspruch 11 entsprechenden Verfahren nach dem Flußdiagramm der Fig.11 für Schub-Hochschaltungen in den V.Gang, in welchem die Zahnradstufe 42 des Synchronisiergetriebes 16 allein in die Antriebsverbindung zwischen Ein- und Ausgangswelle 109 und 27 eingeschaltet ist dadurch die Gangübersetzung bildet, wird bei Auftreten eines Schaltbefehles 60 für eine Hochschaltung vom IV.Gang in den V.Gang ein erster Verfahrensschritt 18 ausgelöst, in welchem überprüft wird, ob sich der Antriebsmotor im Zug- oder im Schubbetrieb befindet. In einem sich anschließenden Verfahrensschritt 65 wird der Antriebsmotor kurzzeitig in seinem Drehmoment hochgefahren, so daß die Last aus dem Antriebsstrang stoßartig herausgenommen ist und die Zahnradkupplung 25-21 der Zahnradstufe 113 des IV.Ganges herausgenommen werden kann. In einem weiteren Verfahrensschritt 63 wird die Reibschlußverbindung 28 unter steigender Übertragungsfähigkeit eingerückt und die Drehzahl der Eingangswelle 109 wahlweise unter zusätzlicher Regelung des Antriebsmotores auf die dem V.Gang entsprechende Synchrondrehzahl abgesenkt. Wenn die Differenzdrehzahl der Reibschlußverbindung 28 gegen Null geht, wird in einem abschließenden Verfahrensschritt 64 die Übertragungsfähigkeit der Reibschlußverbindung 28 entsprechend dem momentanen Betriebspunkt des Antriebsmotores eingestellt.

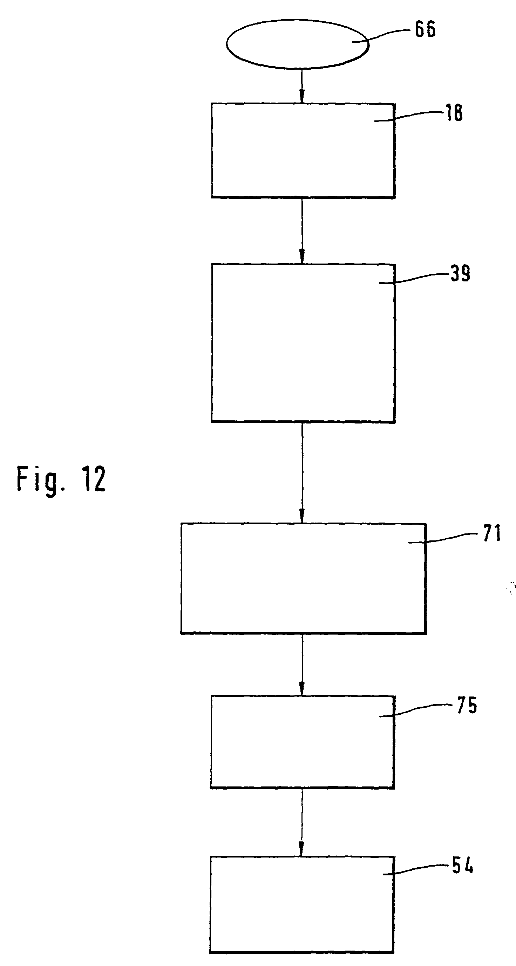

Bei dem der Lehre von Patentanspruch 12 entsprechenden Verfahren nach dem Flußdiagramm der Fig.12 als die eine von zwei Varianten für Zug-Rückschaltungen aus dem höchsten Vorwärtsgang V, in welchem die Zahnradstufe 42 des Synchronisiergetriebes 16 allein in die Antriebsverbindung zwischen Ein- und Ausgangswelle 109 und 27 eingeschaltet ist und dadurch die Gangübersetzung bildet, wird bei Auftreten eines Schaltbefehles 66 für eine Rückschaltung aus dem höchsten Vorwärtsgang V in den IV.Gang ein erster Verfahrensschritt 18 ausgelöst, in welchem überprüft wird, ob sich der Antriebsmotor im Zug- oder im Schubbetrieb befindet. Anschließend wird ein weiterer Verfahrensschritt 39 angestoßen, in welchem eine Überschneidungssteuerung des Synchronisiergetriebes 16 dahingehend erfolgt, daß die Übertragungsfähigkeit der Reibschlußverbindung 33 mit abnehmender Übertragungsfähigkeit der Reibschlußverbindung 28 ansteigt. In einem sich anschließenden weiteren Verfahrensschritt 71 wird unter Aufrechterhaltung der Übertragungsfähigkeit der Reibschlußverbindung 33 im Schlupfbetrieb die Drehzahl der Eingangswelle 109 durch Regelung des Antriebsmotores auf die dem IV.Gang zugehörige Synchrondrehzahl eingestellt. Wenn die Differenzdrehzahl der Zahnradkupplung 25-21 der Zahnradstufe 113 des IV.Ganges gegen Null geht, wird in einem weiteren Verfahrensschritt 75 diese Zahnradkupplung 25-21 eingerückt, so daß in einem abschließenden Verfahrensschritt 54 die Reibschlußverbindung 33 ausgerückt und somit der Schaltvorgang beendet werden kann.

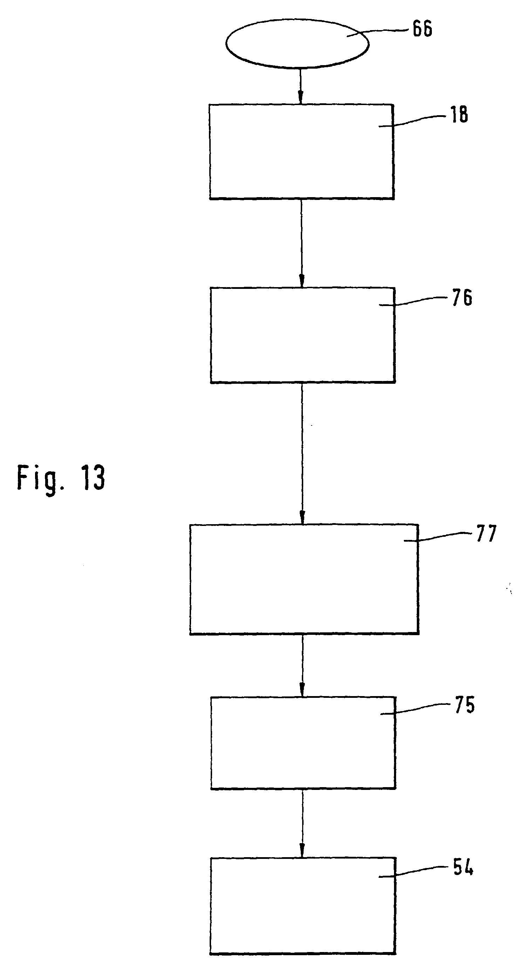

Bei dem der Lehre von Patentanspruch 13 entsprechenden Verfahren nach dem Flußdiagramm der Fig.13 als der anderen Variante für Zug-Rückschaltungen aus dem höchsten Vorwärtsgang V, in welchem die Zahnradstufe 42 des Synchronisiergetriebes 16 allein in die Antriebsverbindung zwischen Ein- und Ausgangswelle 109 und 27 eingeschaltet ist und dadurch die Gangübersetzung bildet, wird bei Auftreten eines Schaltbefehles 66 für eine Rückschaltung aus dem V.Gang in den IV.Gang ein erster Verfahrensschritt 18 ausgelöst, in welchem überprüft wird, ob sich der Antriebsmotor im Zug- oder im Schubbetrieb befindet. In einem weiteren Verfahrensschritt 76 wird die Reibschlußverbindung 28 durch Abbau ihrer Übertragungsfähigkeit in einen Schlupfbetrieb gesteuert sowie in einem weiteren Verfahrensschritt 77 unter Aufrechterhaltung des Schlupfbetriebes der Reibschlußverbindung 28 die Drehzahl der Eingangswelle 27 unter zusätzlichem Auftouren des Antriebsmotores auf die dem IV.Gang zugehörige Synchrondrehzahl eingestellt. Wenn die Differenzdrehzahl der Zahnradkupplung 25-21 der Zahnradstufe 113 des IV.Ganges gegen Null geht, wird in einem weiteren Verfahrensschritt 75 diese Zahnradkupplung 25-21 eingerückt, so daß in einem abschließenden Verfahrensschritt 54 die Reibschlußverbindung 28 ausgerückt und dadurch der Schaltvorgang beendet werden kann.

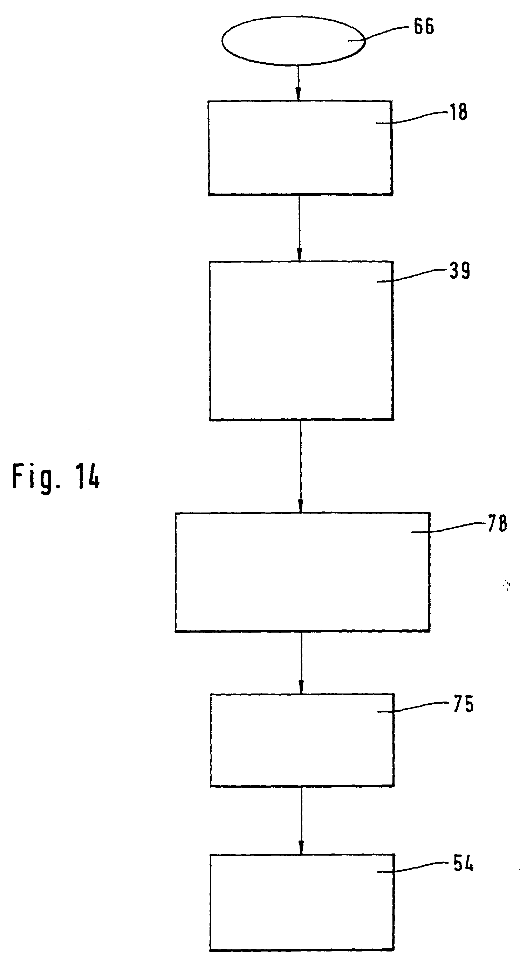

Bei dem der Lehre von Patentanspruch 14 entsprechenden Verfahren nach dem Flußdiagramm der Fig.14 für Schub-Rückschaltungen aus dem höchsten Vorwärtsgang, in welchem die Zahnradstufe 42 des Synchronisiergetriebes 16 allein in die Antriebsverbindung zwischen Ein- und Augangswelle 109 und 27 eingeschaltet ist und dadurch die Gangübersetzung bildet, wird bei Auftreten eines Schaltbefehles 66 für eine Rückschaltung aus dem V.Gang in den IV.Gang ein erster Verfahrensschritt 18 ausgelöst, in welchem überprüft wird, ob sich der Antriebsmotor im Zug- oder im Schubbetrieb befindet. In einem weiteren Verfahrensschritt 39 wird eine Überschneidungssteuerung im Synchronisiergetriebe 16 dahingehend durchgeführt, daß die Übertragungsfähigkeit der Reibschlußverbindung 33 mit abnehmender Übertragungsfähigkeit der Reibschlußverbindung 28 ansteigt. In einem weiteren Verfahrensschritt 78 wird durch Regelung der Übertragungsfähigkeit der Reibschlußverbindung 33 wahlweise unter zusätzlicher Regelung des Antriebsmotores die Drehzahl der Eingangswelle 109 auf die dem IV.Gang entsprechende Synchrondrehzahl eingestellt. Wenn die Differenzdrehzahl der Zahnradkupplung 25-21 der Zahnradstufe 113 des IV.Ganges gegen Null geht, wird diese Zahnradkupplung 25-21 in einem weiteren Verfahrensschritt 75 eingerückt, so daß in einem abschließenden Verfahrensschritt 54 die Reibschlußverbindung 33 ausgerückt und somit der Schaltvorgang beendet werden kann.

Zug- oder Schubhochschaltungen bzw. Zug- oder Schubrückschaltungen, bei denen neben der Zahnradstufe 42 des Synchronisiergetriebes 16 für den höchsten Vorwärtsgang eine der beiden anderen, nicht dem Synchronisiergetriebe 16 angehörenden Zahnradstufen 111 und 112 für den II. und III.Gang beteiligt sind, verlaufen analog zu einem der Verfahren der Fign. 10 bis 14.

## Patentansprüche

1. Verfahren zum Schalten eines Zahnräderwechselgetriebes, bei dem eine Eingangswelle durch jeweils ausschließlich einer Gangübersetzung zugehörige Zahnradstufen und/oder durch ein zentrales Zahnräder-Synchronisiergetriebe mit einer Ausgangswelle in Antriebsverbindung bringbar ist sowie die Losräder der ausschließlich den Gangübersetzungen zugehörigen Zahnradstufen jeweils durch eine zugehörige formschlüssige Zahnradkupplung mit ihrer Welle kuppelbar sind, und bei dem das Zahnräder-Synchronisiergetriebe bei einem Gangwechsel in einen höheren Gang durch Einrücken einer zugehörigen Reibschlußverbindung in einen Synchronisierzustand "Hochschalten" bringbar ist, in welchem die Drehzahl der Eingangswelle auf die dem zu schaltenden höheren Gang entsprechende niedrigere Synchrondrehzahl einsteuerbar ist, und bei dem das Zahnnräder-Synchronisiergetriebe bei einem Gangwechsel in einen niedrigeren Gang durch Einrücken einer zugehörigen Reibschlußverbindung in einen Synchronisierzustand "Rückschalten" bringbar ist, in welchem die Drehzahl der Eingangswelle auf die dem zu schaltenden niedrigeren Gang entsprechende höhere Synchrondrehzahl einsteuerbar ist, und bei dem in dem Synchronisierzustand "Rückschalten" eine eine Übersetzung größer als 1 aufweisende Zahnradstufe des Zahnräder-Synchronisiergetriebes und in dem Synchronisierzustand "Hochschalten" eine eine Übersetzung kleiner als 1 aufweisende Zahnradstufe des Zahnräder-Synchronisiergetriebes jeweils in die Antriebsverbindung zwischen Ein- und Ausgangswelle einschaltbar sind, und bei dem im obersten Vorwärtsgang allein die die Übersetzung kleiner als 1 aufweisende Zahnradstufe des Zahnräder-Synchronisiergetriebes sowie im niedrigsten Vorwärtsgang allein die die Übersetzung großer als 1 aufweisende Zahnradstufe des Zahnräder-Synchronisiergetriebes jeweils in die Antriebsverbindung zwischen Ein- und Ausgangswelle durch Einrücken der zugehörigen Reibschlußverbindung des Zahnräder-Synchronisiergetriebes einschaltbar sind,
**dadurch gekennzeichnet,**
daß bei einer Zug- oder Schub-Hochschaltung aus dem niedrigsten Vorwärtsgang (I), in welchem die die Übersetzung größer als 1 aufweisende Zahnradstufe (38) des Zahnräder-Synchronisiergetriebes (16) durch Einrücken der Reibschlußverbindung (33) für den Synchronisierzustand "Rückschalten" in die Antriebsverbindung zwischen Ein- und Ausgangswelle (109u.27) eingeschaltet ist, eine Überschneidungssteuerung der Übertragungsfähigkeit beider Reibschlußverbindungen (28u.33) des Zahnräder-Synchronisiergetriebes (16) erfolgt, bis durch die ansteigende Übertragungsfähigkeit der dem Synchronisierzustand "Hochschalten" zugehörigen Reibschlußverbindung (28) die Differenzdrehzahl der Zahnradkupplung (bspw.24-19) des höheren Ganges (bspw.II) wahlweise unter synchroner Regelung des Antriebsmotores gegen Null gegangen ist, und daß hierbei oder anschließend die Zahnradkupplung (bspw.24-19) des höheren Ganges (bspw.II) eingerückt und die Reibschlußverbindung (28) für den Synchronisierzustand "Hochschalten" ausgerückt werden.

2. Verfahren nach dem Oberbegriff von Patentanspruch 1,
**dadurch gekennzeichnet,**
daß bei einer Zug-Rückschaltung in den niedrigsten Vorwärtsgang (I), in welchem die die Übersetzung größer als 1 aufweisende Zahnradstufe (38) des Zahnräder-Synchronisiergetriebes (16) in die Antriebsverbindung zwischen Ein- und Ausgangswelle (109u.27) eingeschaltet ist, das Drehmoment des Antriebsmotores kurzzeitig nach Null eingestellt und die Zahnradkupplung (bspw.24-19) des höheren Ganges (bspw.II) ausgerückt wird, und
daß hierbei oder anschließend die Reibschlußverbindung (33) für den Synchronisierzustand "Rückschalten" mit steigender Übertragungsfähigkeit eingerückt wird sowie die Differenzdrehzahl dieser Reibschlußverbindung (33) vorzugsweise unter synchroner Regelung des Antriebsmotores gegen Null und deren Übertragungsfähigkeit entsprechend dem momentanen Betriebspunkt des Antriebsmotores eingestellt werden.

3. Verfahren nach dem Oberbegriff von Patentanspruch 1,
**dadurch gekennzeichnet,**
daß bei einer Zug-Rückschaltung in den niedrigsten Vorwärtsgang (I), in welchem die die Übersetzung größer als 1 aufweisende Zahnradstufe (38) des Zahnräder-Synchronisiergetriebes (16) in die Antriebsverbindung zwischen Ein- und Ausgangswelle (109u.27) eingeschaltet ist, die Differenzdrehzahl an der Zahnradkupplung (bspw.24-19) des höheren Ganges (bspw.II) durch Einrücken der Reibschlußverbindung (28) für den Synchronisierzustand "Hochschalten" nach Null eingestellt und die Zahnradkupplung (bspw.24-19) des höheren Ganges (bspw.II) ausgerückt wird, daß hierbei oder anschließend eine Überschneidungssteuerung der Übertragungsfähigkeit beider Reibschlußverbindungen (28u.33) des Zahnräder-Synchronisiergetriebes (16) erfolgt und die Differenzdrehzahl der Reibschlußverbindung (33) für den Synchronisierzustand "Rückschalten" wahlweise unter synchroner Regelung des Antriebsmotores nach Null eingestellt und die Übertragungsfähigkeit dieser Reibschlußverbindung (33) entsprechend dem momentanen Betriebspunkt des Antriebsmotores angehoben wird.

4. Verfahren nach dem Oberbegriff von Patentanspruch 1,
**dadurch gekennzeichnet,**
daß bei einer Schub-Rückschaltung in den niedrigsten Vorwärtsgang (I), in welchem die die Übersetzung größer als 1 aufweisende Zahnradstufe (38) des Zahnräder-Synchronisiergetriebes (16) in die Antriebsverbindung zwischen Ein- und Ausgangswelle (109u.27) eingeschaltet ist, die Differenzdrehzahl der Zahnradkupplung (bspw.24-19) des höheren Ganges (bspw.II) durch steigende Übertragungsfähigkeit der Reibschlußverbindung (33) für den Synchronisierzustand "Rückschalten" nach Null eingestellt und diese Zahnradkupplung ausgerückt wird, und daß durch weitere Steigerung der Übertragungsfähigkeit der Reibschlußverbindung (33) für den Synchronisierzustand "Rückschalten" deren Differenzdrehzahl vorzugsweise unter synchroner Regelung des Antriebsmotores nach Null eingestellt und deren Übertragungsfähigkeit entsprechend dem momentanen Betriebspunkt des Antriebsmotores angehoben wird.

5. Verfahren nach dem Oberbegriff von Patentanspruch 1,
**dadurch gekennzeichnet,**
daß bei einer Zug-Hochschaltung zwischen zwei Vorwärtsgängen (bspw.II u.III), deren Zahnradstufen (bspw.111u.112) nicht dem Zahnräder-Synchronisiergetriebe (16) angehören, durch steigende Übertragungsfähigkeit der Reibschlußverbindung (28) für den Synchronisierzustand "Hochschalten" die Differenzdrehzahl der Zahnradkupplung (bspw.24-19) des niedrigeren Ganges (bspw.II) nach Null eingestellt und diese Zahnradkupplung ausgerückt wird, und daß die Differenzdrehzahl der Zahnradkupplung (bspw.25-20) des höheren Ganges (bspw.III) durch Steuerung der Übertragungsfähigkeit der Reibschlußverbindung (28) für den Synchronisierzustand "Hochschalten" wahlweise unter synchroner Regelung des Antriebsmotores nach Null eingestellt wird sowie diese Zahnradkupplung (25-20) eingerückt und die Reibschlußverbindung (28) für den Synchronisierzustand "Hochschalten" ausgerückt werden.

6. Verfahren nach dem Oberbegriff von Patentanspruch 1,
**dadurch gekennzeichnet,**
daß bei einer Schub-Hochschaltung zwischen zwei Vorwärtsgängen (bspw.IIu.III), deren Zahnradstufen (bspw.111u.112) nicht dem Zahnräder-Synchronisiergetriebe (16) angehören, zunächst das Drehmoment der Antriebsverbindung zwischen Ein- und Ausgangswelle (109u.27) durch Regelung des Antriebsmotores im Sinne einer Erhöhung des Motormomentes nach Null eingestellt und die Zahnradkupplung (bspw.24-19) des niedrigeren Ganges (bspw.II) ausgerückt wird, und daß die Differenzdrehzahl der Zahnradkupplung (bspw.25-20) des höheren Ganges (bspw.III) durch steigende Übertragungsfähigkeit der Reibschlußverbindung (28) für den Synchronisierzustand "Hochschalten" nach Null eingestellt wird sowie diese Zahnradkupplung (bspw.25-20) eingerückt und die Reibschlußverbindung (28) für den Synchronisierzustand "Hochschalten" ausgerückt werden.

7. Verfahren nach dem Oberbegriff von Patentanspruch 1,
**dadurch gekennzeichnet,**
daß bei einer Zug-Rückschaltung zwischen zwei Vorwärtsgängen (bspw. III u. II), deren Zahnradstufen (112 u.111) nicht dem Zahnräder-Synchronisiergetriebe (16) angehören, die Übertragungsfähigkeit der Antriebsverbindung zwischen Ein- und Ausgangswelle (109 u. 27) durch Regelung des Antriebsmotores kurzzeitig nach Null eingestellt und die Zahnradkupplung (25-20) des höheren Ganges (III) ausgerückt wird, und daß die Differenzdrehzahl der Zahnradkupplung (24-19) der Zahnradstufe (111) des niedrigeren Ganges (II) durch Einrücken unter steigender Übertragungsfähigkeit der Reibschlußverbindung (33) für den Synchronisierzustand "Rückschalten" in Richtung Null verändert und die Drehzahl der Eingangswelle (109) auf die dem niedrigeren Vorwärtsgang zugehörige Synchrondrehzahl durch Regelung des Antriebsmotores angehoben wird, und daß hierbei oder anschließend die Zahnradkupplung (24-19) des niedrigeren Vorwärtsganges (II) eingerückt und die Reibschlußverbindung (33) für den Synchronisierzustand "Rückschalten" ausgerückt werden.

8. Verfahren nach dem Oberbegriff von Patentanspruch 1,
**dadurch gekennzeichnet,**
daß bei einer Zug-Rückschaltung zwischen zwei Vorwärtsgängen (bspw. III u.II), deren Zahnradstufen (112 u. 111) nicht dem Zahnräder-Synchronisiergetriebe (16) angehören, das Drehmoment der Zahnradkupplung (25-20) des höheren Ganges (III) durch Einrücken unter steigender Übertragungsfähigkeit der Reibschlußverbindung (28) für den Synchronisierzustand "Hochschalten" nach Null eingestellt und diese Zahnradkupplung (25-20) ausgerückt wird, und daß unter Aufrechterhaltung der Übertragungsfähigkeit der Reibschlußverbindung (28) für den Synchronisierzustand "Hochschalten" die Differenzdrehzahl der Zahnradkupplung (24-19) des niedrigeren Vorwärtsganges (II) durch Regelung des Antriebsmotores nach Null eingestellt wird sowie diese Zahnradkupplung (24-19) eingerückt und die Reibschlußverbindung (28) für den Synchronisierzustand "Hochschalten" ausgerückt werden.

9. Verfahren nach dem Oberbegriff von Patentanspruch 1,
**dadurch gekennzeichnet,**
daß bei einer Schub-Rückschaltung zwischen zwei Vorwärtsgängen (bspw.IIIu.II), deren Zahnradstufen (112u.111) nicht dem Zahnräder-Synchronisiergetriebe (16) angehören, das Drehmoment an der Zahnradkupplung (25-20) des höheren Ganges (III) durch Einrücken unter steigender Übertragungsfähigkeit der Reibschlußverbindung (33) für den Synchronisierzustand "Rückschalten" nach Null eingestellt und diese Zahnradkupplung (25-20) ausgerückt wird, und daß die Drehzahl der Eingangswelle (109) durch Aufrechterhaltung der Übertragungsfähigkeit der Reibschlußverbindung (33) für den Synchronisierzustand "Rückschalten" wahlweise unter synchroner Regelung des Antriebsmotores in Richtung der dem niedrigeren Gang (II) entsprechenden Synchrondrehzahl angehoben wird sowie die Zahnradkupplung (24-19) der Zahnradstufe (111) des niedrigeren Ganges (II) eingerückt und die Reibschlußverbindung (33) für den Synchronisierzustand "Rückschalten" ausgerückt werden.

10. Verfahren nach dem Oberbegriff von Patentanspruch 1,
**dadurch gekennzeichnet,**
daß bei einer Zug-Hochschaltung in den höchsten Vorwärtsgang (V), in welchem die die Übersetzung kleiner als 1 aufweisende Zahnradstufe (42) des Zahnräder-Synchronisiergetriebes (16) in die Antriebsverbindung zwischen Ein- und Ausgangswelle (109u.27) eingeschaltet ist, das Drehmoment an der Zahnradkupplung (25-21) des niedrigeren Ganges (bspw.IV) durch Einrücken und steigende Übertragungsfähigkeit der Reibschlußverbindung (28) für den Synchronisierzustand "Hochschalten" nach Null eingestellt und diese Zahnradkupplung (25-21) ausgerückt wird, und daß die Drehzahl der Eingangswelle (109) durch die Übertragungsfähigkeit der Reibschlußverbindung (28) für den Synchronisierzustand "Hochschalten" wahlweise unter synchroner Regelung des Antriebsmotores in Richtung der dem höheren Gang (V) entsprechenden Synchrondrehzahl verringert und die Übertragungsfähigkeit der Reibschlußverbindung (28) für den Synchronisierzustand "Hochschalten" entsprechend dem momentanen Betriebspunkt des Antriebsmotores eingestellt werden.

11. Verfahren nach dem Oberbegriff von Patentanspruch 1,
**dadurch gekennzeichnet,**
daß bei einer Schub-Hochschaltung in den höchsten Vorwärtsgang (V), in welchem die die Übersetzung kleiner als 1 aufweisende Zahnradstufe (42) des Zahnräder-Synchronisiergetriebes (16) in die Antriebsverbindung zwischen Ein- und Ausgangswelle (109u.27) eingeschaltet ist, das Drehmoment der Zahnradkupplung (25-21) des niedrigeren Ganges (bspw.IV) durch Regelung des Antriebsmotores kurzzeitig nach Null angehoben und diese Zahnradkupplung (25-21) ausgerückt wird, und daß die Drehzahl der Eingangswelle (109) durch Einrücken und steigende Übertragungsfähigkeit der Reibschlußverbindung (28) für den Synchronisierzustand "Hochschalten" wahlweise unter synchroner Regelung des Antriebsmotores in Richtung der dem höheren Gang (V) entsprechenden Synchrondrehzahl verringert und die Übertragungsfähigkeit der Reibschlußverbindung (28) für den Synchronisierzustand "Hochschalten" entsprechend dem momentanen Betriebspunkt des Antriebsmotores eingestellt werden.

12. Verfahren nach dem Oberbegriff von Patentanspruch 1,
**dadurch gekennzeichnet,**
daß bei einer Zug-Rückschaltung aus dem höchsten Vorwärtsgang (V), in welchem die die Übersetzung kleiner als 1 aufweisende Zahnradstufe (42) des Zahnräder-Synchronisiergetriebes (16) in die Antriebsverbindung zwischen Ein- und Ausgangswelle (109u.27) eingeschaltet ist, die Übertragungsfähigkeit der Reibschlußverbindung (28) für den Synchronisierzustand "Hochschalten " durch eine Überschneidungssteuerung beider Reibschlußverbindungen (28u.33) des Zahnräder-Synchronisiergetriebes (16) nach Null verringert und bei gegen Null gehender Differenzdrehzahl der Zahnradkuplung (25-21) des niedrigeren Ganges (bspw.IV) diese Zahnradkupplung (25-21) eingerückt wird, und daß bei einer von Null abweichenden Differenzdrehzahl dieser Zahnradkupplung (25-21) vor deren Einrücken die Drehzahl der Eingangswelle (9) durch die Übertragungsfähigkeit der Reibschlußverbindung (33) für den Synchronisierzustand "Rückschalten" unter synchroner Regelung des Antriebsmotores auf die dem niedrigeren Gang (bspw.IV) entsprechende Synchrondrehzahl angehoben und nach dem Einrücken dieser Zahnradkupplung (25-21) die Reibschlußverbindung (33) für den Synchronisierzustand "Rückschalten" ausgerückt wird.

13. Verfahren nach dem Oberbegriff von Patentanspruch 1,
**dadurch gekennzeichnet,**
daß bei einer Zug-Rückschaltung aus dem höchsten Vorwärtsgang (V), in welchem die die Übersetzung kleiner als 1 aufweisende Zahnradstufe (42) des Zahnräder-Synchronisiergetriebes (16) in die Antriebsverbindung zwischen Ein-und Ausgangswelle (109u.27) eingeschaltet ist, die Differenzdrehzahl der Zahnradkupplung (25-21) der Zahnradstufe (113) des niedrigeren Ganges (bspw.IV) durch Regelung des Antriebsmotores und durch Verringerung der Übertragungsfähigkeit unter Aufrechterhaltung eines schlupfenden Kupplungszustandes der Reibschlußverbindung (28) für den Synchronisierzustand "Hochschalten" nach Null eingestellt wird sowie diese Zahnradkupplung (25-21) eingerückt und die Reibschlußverbindung (28) für den Synchronisierzustand "Hochschalten" ausgerückt werden.

14. Verfahren nach dem Oberbegriff von Patentanspruch 1,
**dadurch gekennzeichnet,**
daß bei einer Schub-Rückschaltung aus dem höchsten Vorwärtsgang (V), in welchem die die Übersetzung kleiner als 1 aufweisende Zahnradstufe (42) des Zahnräder-Synchronisiergetriebes (16) in die Antriebsverbindung zwischen Ein- und Ausgangswelle (109u.27) eingeschaltet ist, die Übertragungsfähigkeit der Reibschlußverbindung (28) für den Synchronisierzustand "Hochschalten" durch eine Überschneidungssteuerung beider Reibschlußverbindungen (28 u.33) des Zahnräder-Synchronisiergetriebes (16) nach Null eingestellt und die Drehzahl der Eingangswelle (109) durch Aufrechterhaltung der Übertragungsfähigkeit der Reibschlußverbindung (33) für den Synchronisierzustand "Rückschalten" wahlweise unter synchroner Regelung des Antriebsmotores auf die dem niedrigeren Gang (bspw.IV) entsprechende Synchrondrehzahl angehoben wird, und
daß bei oder nach Erreichen der Synchrondrehzahl die Zahnradkupplung (25-21) des niedrigeren Ganges (IV) eingerückt und die Reibschlußverbindung (33) für den Synchronisierzustand "Rückschalten" ausgerückt werden.
